# EUROPÄISCHE PATENTSCHRIFT

(11) **EP 3 644 582 B1**
(45) Veröffentlichungstag und Bekanntmachung des Hinweises auf die Patenterteilung: **12.07.2023**
(21) Anmeldenummer: 19203768.7
(22) Anmeldetag: 17.10.2019
(51) Int. Cl.: H04L 67/12, G06N 3/08, G06N 3/045

(54) **VERFAHREN, VORRICHTUNG UND ZENTRALEINRICHTUNG ZUM ERKENNEN EINER VERTEILUNGSVERSCHIEBUNG IN EINER DATEN- UND/ODER MERKMALSVERTEILUNG VON EINGANGSDATEN**
METHOD, DEVICE AND CENTRAL DEVICE FOR DETECTING A CONCEPT SHIFT IN THE DATA AND / OR FEATURE DISTRIBUTION OF INPUT DATA
PROCÉDÉ, DISPOSITIF ET AGENCEMENT CENTRAL DE DÉTECTION D'UN DÉCALAGE DE DISTRIBUTION DANS UNE DISTRIBUTION DE DONNÉES ET / OU DE CARACTÉRISTIQUES DES DONNÉES D'ENTRÉE

(30) Priorität: 23.10.2018 DE 102018218097
(43) Veröffentlichungstag der Anmeldung: 29.04.2020
(73) Patentinhaber: Volkswagen AG, 38440 Wolfsburg (DE)
(72) Erfinder: Hüger, Fabian, 38302 Wolfenbüttel (DE); Schlicht, Peter, 38442 Wolfsburg (DE)

(56) Entgegenhaltungen:
- US-A1- 2016 071 011
- US-A1- 2018 150 036
- MICHAEL KAMP ET AL: "Efficient Decentralized Deep Learning by Dynamic Model Averaging", ARXIV.ORG, CORNELL UNIVERSITY LIBRARY, 201 OLIN LIBRARY CORNELL UNIVERSITY ITHACA, NY 14853, 9. Juli 2018 (2018-07-09), XP081426474,

## Beschreibung

Die Erfindung betrifft ein Verfahren, eine Vorrichtung, eine Zentraleinrichtung und ein System zum Erkennen einer Verteilungsverschiebung in einer Daten- und/oder Merkmalsverteilung von Eingangsdaten.

Bei modernen Kraftfahrzeugen kommen vermehrt Lösungen zum Einsatz, bei denen einzelne Funktionen auf Grundlage von Maschinenlernen (engl. Machine Learning) erzeugt wurden. Solche Funktionen betreffen beispielsweise das Infotainment, Fahrerassistenzsysteme, Sicherheitsfunktionen, aber auch Komfortfunktionen und das automatisierte Fahren. Bei diesen Lösungen werden vermehrt Ansätze des tiefen Lernens (engl. Deep Learning) verwendet, bei denen aus erfassten Sensordaten (Umfeldsensorik, Innenraumüberwachung, Sensoren im Kraftfahrzeug etc.) höherwertige Daten erzeugt werden, beispielsweise in Form eines Umfeld- oder Fahrermodells oder in Bezug auf wahrgenommene Objekte oder die Fahrzeugregelung etc.

Die genannten Funktionen werden durch Trainieren neuronaler Netze entwickelt, wobei ein neuronales Netz eine Zuordnung höherwertiger Daten zu entsprechenden Sensordaten lernt. Solch ein Lernvorgang hängt stark von einer Daten- und/oder Merkmalsverteilung ab, das heißt von einer Zusammensetzung der Trainingsdatenmenge und der darin enthaltenen Verteilung von Merkmalen (engl. Features) deren Korellation zu den höherwertigen Daten das neuronale Netz sensiert. Daher werden Trainingsstrategien und Trainingsdatensätze gewählt, die die real existierende Verteilung möglichst gut abbilden.

Während der nachfolgenden Anwendung der auf diese Weise angelernten Funktionen können sich diese Verteilungen jedoch verändern, z.B. auf Grund einer Veränderung des Verhaltens, einer Alterung oder neuartiger Kontexte (Wetter, Jahreszeit, Verkehrsteilnehmer, Verkehrsregeln etc.). Eine solche, im allgemeinen langsam auftretende Verteilungsverschiebung ("Concept Drift") sorgt potentiell für eine schrittweise Verschlechterung der funktionalen Güte der entsprechenden Funktion. Ein Bewerten der funktionalen Güte ist hierbei während der Anwendung der Funktion äußerst schwierig, weil in vielen Situationen ein komplettes Scheitern von Funktionen, beispielsweise auf Grund einer Funktionseinschränkung oder einer Komfortverringerung, nicht erstrebenswert ist. Darüber hinaus ist eine Verteilungsverschiebung oder eine geringfügige Ungenauigkeit der Funktion während der Anwendung der Funktion nur schwer festzustellen, da eine die reale Situation abbildende Grundwahrheit fehlt.

Obwohl Lösungen zum Erkennen von Verteilungsverschiebungen basierend auf Autoencodern und diskriminativen Netzen existieren, ist das Problem derzeit nur unbefriedigend gelöst.

Aus der US 2016/0071011 A1 und der US 2018/0150036 A1 sind Verfahren zum Detektieren eines "Concept drifts" bekannt, bei dem zwei lernende Modelle mit unterschiedlichen Lernraten auf einen Strom aus Ereignissen angewendet werden, wobei eine jeweilige Ausgabe der zwei lernenden Modelle miteinander verglichen wird.

Aus Michael Kamp et al., Efficient Decentralized Deep Learning by Dynamic Model Averaging, arXiv:1807.03210v2 [cs.LG], 13. November 2018, ist ein Verfahren zum dezentralisierten Trainieren von tiefen Neuronalen Netzen mit verteilten Datenquellen bekannt. Das Verfahren erlaubt eine schnelle Anpassung bei Auftreten von "Concept drifts".

Der Erfindung liegt die Aufgabe zu Grunde, ein Verfahren, eine Vorrichtung, eine Zentraleinrichtung und ein System zum Erkennen einer Verteilungsverschiebung in einer Daten- und/oder Merkmalsverteilung von Eingangsdaten zu schaffen, bei der eine Verteilungsverschiebung verbessert festgestellt werden kann.

Die Aufgabe wird erfindungsgemäß durch ein Verfahren mit den Merkmalen des Patentanspruchs 1, eine Vorrichtung mit den Merkmalen des Patentanspruchs 9, eine Zentraleinrichtung mit den Merkmalen des Patentanspruchs 11 und ein System mit den Merkmalen des Patentanspruchs 13 gelöst. Vorteilhafte Ausgestaltungen der Erfindung ergeben sich aus den Unteransprüchen.

Es ist eine Grundidee der Erfindung, auf Eingangsdaten mittels eines ersten Verarbeitungsmoduls und mindestens eines zweiten Verarbeitungsmoduls dieselbe Funktion ausführen zu lassen. Hierbei unterscheiden sich das erste Verarbeitungsmodul und das mindestens eine zweite Verarbeitungsmodul strukturell voneinander, das heißt die Verarbeitungsmodule stellen zwar einer Zielsetzung nach identische Funktionen bereit, beispielsweise eine Funktion zu Erkennung von Objekten in erfassten Umfelddaten, jedoch stellen die Verarbeitungsmodule diese Funktionen auf unterschiedliche Art und Weise bereit. Zumindest das erste Verarbeitungsmodul wurde hierbei auf Grundlage von Maschinenlernen erstellt. Das mindestens eine zweite Verarbeitungsmodul kann ebenfalls auf Grundlage von Maschinenlernen erstellt worden sein, es kann jedoch auch auf andere Weise erzeugt und konfiguriert worden sein, beispielsweise durch ein fest vorgegebenes (nicht angelerntes) Verfahren. Die von den Verarbeitungsmodulen gelieferten Ergebnisse werden miteinander verglichen und eine Verteilungsverschiebung wird festgestellt auf Grundlage des Vergleichsergebnisses. Erfindungsgemäß handelt es sich bei der Funktion um eine Wahrnehmungsfunktion zur Objektklassifizierung, wobei eine Verteilungsverschiebung festgestellt wird, wenn sich die Ergebnisse für die entsprechend demselben Objekt zugeordneten Objektklassen voneinander unterscheiden, beispielsweise wenn die zugeordneten Wahrscheinlichkeiten einer Zugehörigkeit des Objekts zu den einzelnen Objektklassen Abweichungen aufweisen, die oberhalb eines vorgegebenen Toleranzschwellwertes liegen. Wurde eine Verteilungsverschiebung festgestellt, so wird ein Kandidatensignal bereitgestellt. Das bereitgestellte Kandidatensignal wird dann ausgegeben und kann gemäß dem dritten Aspekt der Erfindung weiterverarbeitet werden.

Der Vorteil der Erfindung ist, dass durch das Verwenden von mindestens zwei Verarbeitungsmodulen, welche die der Zielsetzung nach identische Funktion ausführen, potentielle Kandidaten für eine Verteilungsverschiebung auf einfache Weise identifiziert werden können.

Insbesondere kann vorgesehen sein, dass die mobile Einrichtung ein Kraftfahrzeug ist. Das Kraftfahrzeug umfasst dann eine Vorrichtung gemäß dem zweiten Aspekt der Erfindung. Die Eingangsdaten sind dann insbesondere Sensordaten, welche ein Umfeld und z.B. einen Innenraum des Kraftfahrzeugs beschreiben. Es kann jedoch auch vorgesehen sein, dass eine mobile Einrichtung ein anderes Land-, Luft- oder Wasserfahrzeug ist. Es kann auch vorgesehen sein, dass eine mobile Einrichtung ein Mobiltelefon oder eine Infrastrukturüberwachungsinstanz (Verkehrskamera; vernetzte Verkehrsführungsanlage, z.B. Ampel, Weiche, Schleusensteuerung) ist.

Es ist vorgesehen, dass das Kandidatensignal eine Beschreibung der verwendeten Verarbeitungsmodule und/oder eine Beschreibung des Vergleichsergebnisses und/oder eine Beschreibung einer Kontextsituation umfasst. Die Beschreibung der verwendeten Verarbeitungsmodule umfasst beispielsweise Informationen zu einer Struktur der Verarbeitungsmodule. Handelt es sich beispielsweise um neuronale Netze, so kann die Beschreibung Informationen zur Struktur und zu Parametern bzw. den einzelnen Gewichtungen innerhalb der neuronalen Netze umfassen. Ferner kann die Beschreibung auch Identifikationsnummern der Verarbeitungsmodule umfassen, welche diese eindeutig identifizieren. Eine Beschreibung des Vergleichsergebnisses umfasst beispielsweise eine qualitative und/oder quantitative Informationen zu einer Abweichung, die in den von den Verarbeitungsmodulen gelieferten Ergebnissen vorliegt. Eine Kontextsituation umfasst insbesondere Informationen, die eine Situation beschreiben, in der die Verteilungsverschiebung festgestellt wurde. Diese Informationen können beispielsweise eine Ortsinformation, eine Zeitinformation und/oder eine sonstige die Umstände beschreibende Information umfassen.

In einer Ausführungsform ist vorgesehen, dass im Falle einer festgestellten Verteilungsverschiebung mittels einer Steuereinrichtung der mobilen Einrichtung zusätzliche Daten über eine Kontextsituation gesammelt werden, in der die Verteilungsverschiebung aufgetreten ist. Hierdurch können gezielt weitere Informationen gesammelt werden, um die Kontextsituation verbessert beschreiben zu können und die festgestellte Verteilungsverschiebung verbessert bewerten und validieren zu können.

In einer Ausführungsform ist vorgesehen, dass das Ausgeben des Kandidatensignals ein Übermitteln des Kandidatensignals über eine Luftschnittstelle von der zumindest einen mobilen Einrichtung an eine Zentraleinrichtung gemäß dem dritten Aspekt der Erfindung umfasst. Die Luftschnittstelle kann beispielsweise eine Mobilfunkschnittstelle sein, mit der sich die mobile Einrichtung drahtlos über das Mobilfunknetz und/oder das Internet mit der Zentraleinrichtung verbinden lässt. Es können prinzipiell jedoch auch andere drahtlose Schnittstellen verwendet werden.

In einer weiterbildenden Ausführungsform ist vorgesehen, dass ausgegebene Kandidatensignale der zumindest einen mobilen Einrichtung von der Zentraleinrichtung mittels einer Empfangseinrichtung empfangen werden, wobei empfangene Kandidatensignale der zumindest einen mobilen Einrichtung mittels einer Assessoreinrichtung der Zentraleinrichtung ausgewertet werden, und wobei eine kumulierte Verteilungsverschiebung festgestellt wird und ein Feststellungssignal erzeugt und ausgegeben wird, sofern eine Häufung von Kandidatensignalen eines gleichen Typs festgestellt wird. Durch das Berücksichtigen mehrerer Kandidatensignale kann verbessert festgestellt werden, ob eine Verteilungsverschiebung vorliegt oder nicht. Insbesondere mit Hilfe weiterer Informationen zu den einzelnen Kontextsituationen kann eine Häufung von Kandidatensignalen gleichen Typ festgestellt werden. Der Typ bezeichnet hierbei eine Eigenschaft der Verteilungsverschiebung und/oder der entsprechenden Verarbeitungsmodule und/oder der Kontextsituation. Der Typ kann beispielsweise durch einen Ort, eine Zeit und/oder eine bestimmte Klasse von Objekten und/oder eine bestimmte Klasse von Vergleichsergebnissen und/oder ein bestimmtes Verarbeitungsmodul definiert sein. Treten beispielsweise vermehrt Kandidatensignale auf, die dem gleichen Ort zugeordnet werden können, so kann auf eine Verteilungsverschiebung geschlossen werden. So können z.B. für einen Ort an einer Kreuzung, wo sonst immer eine Lichtsignalanlage anzutreffen war, derzeit aber eine Baustelle zu finden ist, mittels der mobilen Einrichtungen, insbesondere mittels mehrerer Kraftfahrzeuge, entsprechende Kandidatensignale erzeugt und an die Zentraleinrichtung übermittelt werden. Die Zentraleinrichtung stellt dann für diesen Ort eine Häufung fest und stellt hierdurch eine kumulierte Verteilungsverschiebung fest, das heißt eine Verteilungsverschiebung, die zumindest mehr als einmal von einer mobilen Einrichtung oder von mehreren mobilen Einrichtungen festgestellt wurde. Wurde eine solche kumulierte Verteilungsverschiebung festgestellt, so wird das Feststellungssignal erzeugt. Auf Grundlage des Feststellungssignals kann dann nachfolgend beispielsweise das erste Verarbeitungsmodul zur Anpassung auf die geänderte Verteilung trainiert werden.

Insbesondere kann vorgesehen sein, dass die Kandidatensignale von der Zentraleinrichtung über die Luftschnittstelle empfangen werden.

In einer weiterbildenden Ausführungsform ist vorgesehen, dass die Assessoreinrichtung eine festgestellte kumulierte Verteilungsverschiebung bewertet und das Feststellungssignal eine aus der Bewertung abgeleitete Bewertungsinformation umfasst. Die Bewertung kann beispielsweise eine Stärke der Verteilungsverschiebung und/oder eine kontextuelle Einordnung umfassen, d.h. eine Information darüber, unter welchen Umständen die Verteilungsverschiebungen aufgetreten sind. Diese Bewertungsinformation liefert wertvolle Informationen, die es ermöglichen, das oder die betroffene(n) Verarbeitungsmodul(e) verbessert an die geänderte Verteilung anzupassen. Insbesondere können zum Anpassen benötigte Trainingsdaten hinsichtlich ihrer Ausprägung und ihres Umfangs eingegrenzt werden.

In einer Ausführungsform ist vorgesehen, dass nach Feststellen der kumulierten Verteilungsverschiebung durch die Assessoreinrichtung mindestens eine weitere der mobilen Einrichtungen dazu veranlasst wird, eine Verteilungsverschiebung zu erkennen. Dies kann beispielsweise durch Übermitteln eines entsprechenden Befehls an die mindestens eine weitere der mobilen Einrichtungen über die Luftschnittstelle erfolgen. Die mindestens eine weitere mobile Einrichtung kann dann, beispielsweise an dem Ort, wo die Verteilungsverschiebung festgestellt wurde, ebenfalls das beschriebene Verfahren durchführen und hierdurch überprüfen, ob erneut eine Verteilungsverschiebung festgestellt werden kann. Es kann hierdurch gezielt überprüft werden, ob eine Verteilungsverschiebung vorliegt oder ob es sich gegebenenfalls um einen Messfehler oder einen Irrtum beim Feststellen handelt.

In einer weiteren Ausführungsform ist vorgesehen, dass die Verfahrensschritte alternativ oder zusätzlich mit mindestens einem weiteren zweiten Verarbeitungsmodul wiederholt werden. Hierdurch können gezielt zweite Verarbeitungsmodule hinzugeschaltet werden. Sind beispielsweise vier Verarbeitungsmodule in der mobilen Einrichtung zum Ausführen der gleichen Funktion vorhanden, werden jedoch jeweils immer nur zwei dieser Verarbeitungsmodule gleichzeitig verwendet, z.B. aus Energieeffizienzgründen, so können nacheinander jeweils andere Kombinationen von zweien dieser Verarbeitungsmodule gleichzeitig betrieben werden (jeweils das erste Verarbeitungsmodul mit jeweils einem der drei anderen zweiten Verarbeitungsmodule), wobei das Verfahren sukzessive jeweils für jede Kombination ausgeführt wird. Es kann nun insbesondere festgelegt sein, dass eine Verteilungsverschiebung nur festgestellt wird und ein Kandidatensignal nur erzeugt wird, wenn in allen drei Kombinationen eine solche Verteilungsverschiebung festgestellt wird. Im Falle eines Kraftfahrzeugs als mobiler Einrichtung können die einzelnen Kombinationen beispielsweise bei aufeinanderfolgenden Fahrten des Kraftfahrzeugs entlang der gleichen Strecke verwendet werden, wobei das Verfahren für jede der Kombinationen bei erneuter Fahrt auf der Strecke wiederholt wird.

In einer weiteren Ausführungsform ist vorgesehen, dass die Eingangsdaten vor dem Empfangen mittels einer Speichereinrichtung der mobilen Einrichtung aufgezeichnet werden und erst nach dem Aufzeichnen an die Eingangseinrichtung übermittelt werden. Auf diese Weise kann beispielsweise während einer Fahrt einer als Kraftfahrzeug ausgebildeten mobilen Einrichtung eine für das Erkennen der Verteilungsverschiebung notwendige Rechenleistung eingespart werden. Von Sensoren empfangene Eingangsdaten werden in der Speichereinrichtung gespeichert und erst nach Abschluss der Fahrt mittels der Verarbeitungsmodule verarbeitet und mittels der Auswerteeinrichtung auf eine Verteilungsverschiebung hin untersucht. Dies erfolgt beispielsweise, wenn das Kraftfahrzeug parkt und ansonsten nicht benutzt wird (oder allgemeiner, wenn die mobile Einheit ihrer eigentlichen Funktion nicht nachkommen muss oder anderweitig über freie Berechnungskapazitäten verfügt - dies kann auch über das Auslagern der Berechnungen über eine (Luft-)Schnittstelle erfolgen - Beispiele hierfür sind das Anschließen der mobilen Einheit an eine Ladeinfrastruktur).. Wird eine Verteilungsverschiebung festgestellt, so werden die entsprechenden Daten an die Zentraleinrichtung übermittelt. Eine Rechenleistung kann hierdurch zeitlich optimal auf zur Fahrt notwendige Funktionen und das Erkennen einer Verteilungsverschiebung verteilt werden. Eine im Kraftfahrzeug vorhandene maximal vorgehaltene Rechenleistung kann hierdurch reduziert werden, wodurch sich ein Energieverbrauch und Kosten reduzieren lassen.

Teile der Vorrichtung und der Zentraleinrichtung können einzeln oder zusammengefasst als eine Kombination von Hardware und Software ausgebildet sein, beispielsweise als Programmcode, der auf einem Mikrocontroller oder Mikroprozessor ausgeführt wird.

Nachfolgend wird die Erfindung anhand bevorzugter Ausführungsbeispiele unter Bezugnahme auf die Figuren näher erläutert. Hierbei zeigen:
- Fig. 1: eine schematische Darstellung einer Ausführungsform der Vorrichtung zum Erkennen einer Verteilungsverschiebung in einer Daten- und/oder Merkmalsverteilung von Eingangsdaten;
- Fig. 2: eine schematische Darstellung einer Ausführungsform der Zentraleinrichtung zum Erkennen einer Verteilungsverschiebung in einer Daten- und/oder Merkmalsverteilung von Eingangsdaten;
- Fig. 3: eine schematische Darstellung einer Ausführungsform des Systems zum Erkennen einer Verteilungsverschiebung in einer Daten- und/oder Merkmalsverteilung von Eingangsdaten.

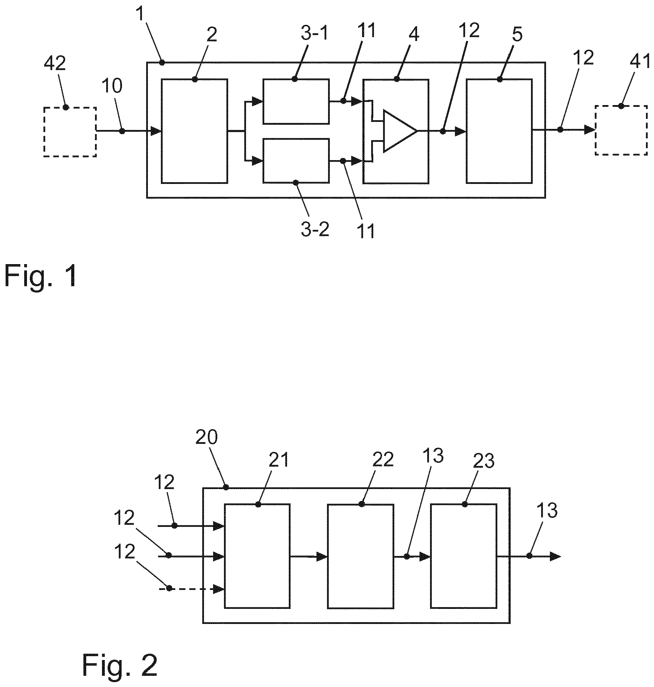

In Fig. 1 ist eine schematische Darstellung einer Ausführungsform der Vorrichtung 1 zum Erkennen einer Verteilungsverschiebung in einer Daten- und/oder Merkmalsverteilung von Eingangsdaten 10 gezeigt. Die Vorrichtung 1 wird in einer mobilen Einrichtung verwendet. Die Vorrichtung 1 umfasst eine Eingangseinrichtung 2, ein erstes Verarbeitungsmodul 3-1, ein zweites Verarbeitungsmodul 3-2, eine Auswerteeinrichtung 4 und eine Ausgabeeinrichtung 5.

Die Eingangseinrichtung 2 empfängt die Eingangsdaten 10. Die Eingangsdaten 10 sind beispielsweise von Sensoren einer mobilen Einrichtung erfasste Sensordaten, die der Vorrichtung 1 bereitgestellt werden.

Die Eingangsdaten 10 werden von der Eingangseinrichtung 2 den Verarbeitungsmodulen 3-1, 3-2 zugeführt. Das erste Verarbeitungsmodul 3-1 und das zweite Verarbeitungsmodul 3-2 unterscheiden sich strukturell voneinander. Zumindest das erste Verarbeitungsmodul 3-1 wurde auf Grundlage von Maschinenlernen erstellt und umfasst insbesondere ein neuronales Netz. Das zweite Verarbeitungsmodul 3-2 kann ebenfalls ein neuronales Netz umfassen, kann jedoch auch auf andere Weise ausgebildet sein. Beide Verarbeitungsmodule 3-1, 3-2 führen eine der Zielsetzung nach identische Funktion auf den empfangenen Eingangsdaten 10 aus, erfindungsgemäß eine Wahrnehmungsfunktion, durch die Objekte im Umfeld der mobilen Einrichtung klassifiziert werden.

Die von den Verarbeitungsmodulen 3-1, 3-2 gelieferten Ergebnisse 11 werden der Auswerteeinrichtung 4 zugeführt. Die Auswerteeinrichtung 4 vergleicht die Ergebnisse 11 miteinander und stellt ein Kandidatensignal 12 bereit, sofern eine Verteilungsverschiebung festgestellt wurde. Erfindungsgemäß wird eine solche Verteilungsverschiebung festgestellt, wenn die Verarbeitungsmodule 3-1, 3-2 unterschiedliche Klassifizierungen von Objekten als Ergebnisse 11 liefern. Insbesondere werden hierbei die den einzelnen zu klassifizierenden Objekten in Form von Klassenwahrscheinlichkeiten zugeordneten Objektklassen miteinander verglichen. Hierbei können auch vorgegebene Schwellwerte, beispielsweise für eine Anzahl unterschiedlich klassifizierter Objekte vorgesehen sein, damit eine Verteilungsverschiebung festgestellt wird.

Die Ausgabeeinrichtung 5 gibt anschließend das bereitgestellte Kandidatensignal 12 aus. Das Ausgeben kann beispielsweise in Form eines digitalen Datenpakets erfolgen. Insbesondere kann das Kandidatensignal 12 mittels einer Luftschnittstelle, beispielsweise mittels einer Mobilfunkschnittstelle, an eine Zentraleinrichtung übermittelt werden.

Es ist vorgesehen, dass das Kandidatensignal 12 eine Beschreibung der verwendeten Verarbeitungsmodule 3-1, 3-2 und/oder eine Beschreibung des Vergleichsergebnisses und/oder eine Beschreibung einer Kontextsituation, in der die Verteilungsverschiebung festgestellt wurde, umfasst.

Es kann ferner vorgesehen sein, dass im Falle einer festgestellten Verteilungsverschiebung mittels einer Steuereinrichtung 41 der mobilen Einrichtung zusätzliche Daten über eine Kontextsituation gesammelt werden, in der die Verteilungsverschiebung aufgetreten ist. Diese zusätzlichen Daten können ebenfalls mit dem Kandidatensignal 12 übermittelt werden.

Es kann ferner vorgesehen sein, dass die Eingangsdaten 10 vor dem Empfangen mittels einer Speichereinrichtung 42 der mobilen Einrichtung (oder alternativ der Vorrichtung 1, nicht gezeigt) aufgezeichnet werden und erst nach dem Aufzeichnen an die Eingangseinrichtung 2 übermittelt werden. Hierdurch kann ein Rechenaufwand zeitlich besser verteilt werden bzw. eine maximal zur Verfügung stehende Rechenleistung reduziert werden.

In Fig. 2 ist eine schematische Darstellung einer Ausführungsform der Zentraleinrichtung 20 zum Erkennen einer Verteilungsverschiebung in einer Daten- und/oder Merkmalsverteilung von Eingangsdaten gezeigt. Die Zentraleinrichtung 20 befindet sich außerhalb der mobilen Einrichtungen und ist beispielsweise in einem zentralen Server ausgebildet.

Die Zentraleinrichtung 20 umfasst eine Empfangseinrichtung 21, eine Assessoreinrichtung 22 und eine Ausgangseinrichtung 23.

Die Empfangseinrichtung 21 empfängt ausgegebene Kandidatensignale 12 (vgl. auch Fig. 1) von zumindest einer mobilen Einrichtung. Es kann hierbei vorgesehen sein, dass die Empfangseinrichtung 21 mehrere Kandidatensignale 12 von einer mobilen Einrichtung empfängt, beispielsweise Kandidatensignale 12, die zu unterschiedlichen Zeitpunkten erzeugt und bereitgestellt wurden. Es kann jedoch auch vorgesehen sein, dass Kandidatensignale 12 von unterschiedlichen mobilen Einrichtungen empfangen werden, beispielsweise von mehreren Kraftfahrzeugen, die in derselben Kontextsituation eine Verteilungsverschiebung in den jeweiligen Eingangsdaten feststellen und jeweils ein Kandidatensignal 12 bereitstellen. Das Empfangen der Kandidatensignale 12 kann beispielsweise in Form eines digitalen Datenpakets erfolgen.

Die Assessoreinrichtung 22 wertet die empfangenen Kandidatensignale 12 der einen oder der mehreren mobilen Einrichtung(en) aus und stellt eine kumulierte Verteilungsverschiebung fest, sofern eine Häufung von Kandidatensignalen 12 eines gleichen Typs vorliegt. Der Typ bezeichnet hierbei insbesondere einen Kontext, in dem die einzelnen Verteilungsverschiebungen aufgetreten sind, beispielsweise eine Ortsinformation, eine Zeitinformation oder bestimmte Klassen von Merkmalen, beispielsweise Objektklassen. Wird eine kumulierte Verteilungsverschiebung von der Assessoreinrichtung 22 festgestellt, so erzeugt diese ein Feststellungssignal 13.

Die Ausgangseinrichtung 23 gibt das erzeugte Feststellungssignal 13 aus. Dies kann beispielsweise in Form eines digitalen Datenpakets erfolgen. Das Feststellungssignal 13 kann neben der Information, dass eine kumulierte, das heißt von mehreren mobilen Einrichtungen festgestellte, Verteilungsverschiebung vorliegt, weitere Informationen zum Kontext, in dem die kumulierte Verteilungsverschiebung bzw. die einzelnen Verteilungsverschiebungen festgestellt wurden, umfassen. Diese weitere Information wird dann ebenfalls ausgegeben.

Auf Grundlage des ausgegebenen Feststellungssignals 13 können dann Maßnahmen getroffen werden, um insbesondere das erste Verarbeitungsmodul 3-1 auf die geänderte Verteilung in den Eingangsdaten 10 zu trainieren. Es kann jedoch vorgesehen sein, dass auch das zweite Verarbeitungsmodul 3-2 angepasst wird.

Es kann vorgesehen sein, dass die Assessoreinrichtung 22 eine festgestellte kumulierte Verteilungsverschiebung bewertet und das Feststellungssignal 13 eine aus der Bewertung abgeleitete Bewertungsinformation umfasst.

Ferner kann vorgesehen sein, dass nach Feststellen der kumulierten Verteilungsverschiebung durch die Assessoreinrichtung 22 mindestens eine weitere der mobilen Einrichtungen dazu veranlasst wird, eine Verteilungsverschiebung zu erkennen. Hierzu erzeugt die Zentraleinrichtung 20 beispielsweise ein entsprechendes Befehlssignal und übermittelt dieses an die mindestens eine weitere mobile Einrichtung, sodass diese in dem entsprechenden Kontext ebenfalls das Verfahren zum Erkennen einer Verteilungsverschiebung durchführt.

Es kann vorgesehen sein, dass die Verfahrensschritte alternativ oder zusätzlich mit mindestens einem weiteren zweiten Verarbeitungsmodul 3-2 (vgl. Fig. 1) wiederholt werden. Hierdurch lassen sich beispielsweise im normalen Betrieb deaktivierte Verarbeitungsmodule 3-1, 3-2 gezielt aktivieren, um Verteilungsverschiebungen verbessert aufspüren zu können. Auch können hierdurch beispielsweise bestimmte Vorgaben bezüglich einer Mindestanzahl von Verarbeitungsmodulen 3-1, 3-2, welche an dem Feststellen der Verteilungsverschiebung beteiligt sein müssen, berücksichtigt werden. Beispielsweise kann vorgesehen sein, dass die Ergebnisse von vier Verarbeitungsmodulen 3-1, 3-2 miteinander verglichen werden müssen, damit eine Verteilungsverschiebung festgestellt werden kann. Sind jedoch im normalen Betrieb immer nur zwei der vier Verarbeitungsmodule 3-1, 3-2 aktiv, so kann das Verfahren zu späteren Zeitpunkten jeweils mit anderen Kombinationen von jeweils dem ersten Verarbeitungsmodul 3-1 mit jeweils einem der drei zweiten Verarbeitungsmodule 3-2 durchgeführt werden.

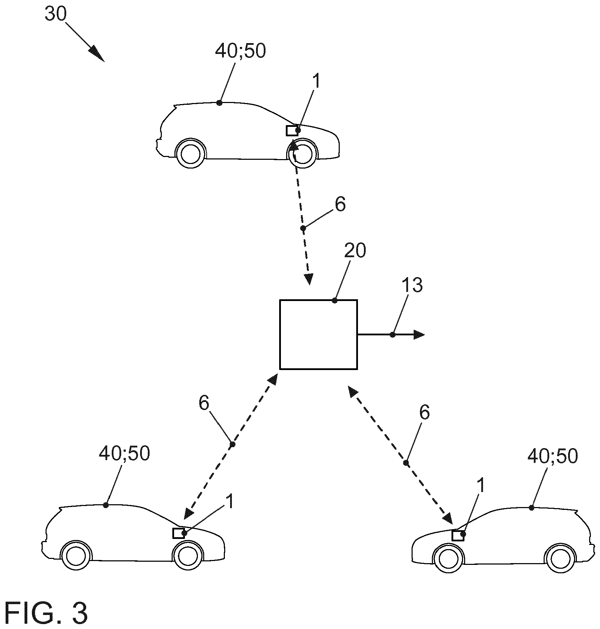

In Fig. 3 ist eine schematische Darstellung einer Ausführungsform des Systems 30 zum Erkennen einer Verteilungsverschiebung in einer Daten- und/oder Merkmalsverteilung von Eingangsdaten gezeigt. Das System 30 umfasst mehrere der Vorrichtungen 1, die jeweils in als Kraftfahrzeugen 50 ausgebildeten mobilen Einrichtungen 40 angeordnet sind, und eine Zentraleinrichtung 20. Die Vorrichtungen 1 übermitteln nach dem jeweiligen Feststellen einer Verteilungsverschiebung das jeweilige Kandidatensignal über Luftschnittstellen 6 an die Zentraleinrichtung 20, welche je nach Häufung ein Feststellungssignal 13 erzeugt und ausgibt.

Es kann ebenfalls vorgesehen sein, dass die Assessoreinrichtung der Zentraleinrichtung 20 mobile Einrichtungen 40 bzw. die Vorrichtungen 1 in den Kraftfahrzeugen 50 dazu veranlasst, nach Feststellen einer kumulierten Verteilungsverschiebung Verteilungsverschiebungen zu erkennen und hierzu entsprechende Messdaten zu erfassen. Mit Hilfe des Systems 30 ist es daher möglich, eine Flotte von Kraftfahrzeugen 50 dazu zu verwenden, gezielt Verteilungsverschiebungen auszuspüren und zu untersuchen. Das Erkennen einer Verteilungsverschiebung ist hierdurch deutlich verbessert, da ein Erkennen fortlaufend und stets auf Grundlage aktueller Eingangsdaten erfolgt.

Teile der Vorrichtung 1 und der Zentraleinrichtung 20 können einzeln oder zusammengefasst als eine Kombination von Hardware und Software ausgebildet sein, beispielsweise als Programmcode, der auf einem Mikrocontroller oder Mikroprozessor ausgeführt wird.

### Bezugszeichenliste

- 1: Vorrichtung
- 2: Eingangseinrichtung
- 3-1: Verarbeitungsmodul
- 3-2: Verarbeitungsmodul
- 4: Auswerteeinrichtung
- 5: Ausgabeeinrichtung
- 6: Luftschnittstelle
- 10: Eingangsdaten
- 11: Ergebnis
- 12: Kandidatensignal
- 13: Feststellungssignal
- 20: Zentraleinrichtung
- 21: Empfangseinrichtung
- 22: Assessoreinrichtung
- 23: Ausgangseinrichtung
- 30: System
- 40: mobile Einrichtung
- 41: Steuereinrichtung
- 42: Speichereinrichtung
- 50: Kraftfahrzeug

## Patentansprüche

1. Verfahren zum Erkennen einer Verteilungsverschiebung in einer Daten- und/oder Merkmalsverteilung von Eingangsdaten (10), wobei das Verfahren in zumindest einer mobilen Einrichtung (40) ausgeführt wird, umfassend die folgenden Schritte:
Empfangen der Eingangsdaten (10) mittels einer Eingangseinrichtung (2),
Ausführen einer der Zielsetzung nach identischen Funktion auf den empfangenen Eingangsdaten (10) mittels eines ersten Verarbeitungsmoduls (3-1) und mindestens eines zweiten Verarbeitungsmoduls (3-2), wobei das erste Verarbeitungsmodul (3-1) und das mindestens eine zweite Verarbeitungsmodul (3-2) sich strukturell voneinander unterscheiden, wobei zumindest das erste Verarbeitungsmodul (3-1) auf Grundlage von Maschinenlernen erstellt wurde, und wobei die Verarbeitungsmodule (3-1,3-2) eine Wahrnehmungsfunktion ausführen, durch die Objekte im Umfeld der mobilen Einrichtung (40) klassifiziert werden,
Vergleichen der von den Verarbeitungsmodulen (3-1, 3-2) gelieferten Ergebnisse (11) und Feststellen einer Verteilungsverschiebung auf Grundlage des Vergleichsergebnisses mittels einer Auswertungseinrichtung (4), wobei eine Verteilungsverschiebung festgestellt wird, wenn die Verarbeitungsmodule (3-1,3-2) unterschiedliche Klassifizierungen von Objekten als Ergebnisse (11) liefern, und sofern eine Verteilungsverschiebung festgestellt wurde: Bereitstellen eines Kandidatensignals (12), und
Ausgeben des bereitgestellten Kandidatensignals (12) mittels einer Ausgabeeinrichtung (5),
wobei das Kandidatensignal (12) eine Beschreibung der verwendeten Verarbeitungsmodule (3-1, 3-2) und/oder eine Beschreibung des Vergleichsergebnisses und/oder eine Beschreibung einer Kontextsituation umfasst.

2. Verfahren nach Anspruch 1, **dadurch gekennzeichnet, dass** im Falle einer festgestellten Verteilungsverschiebung mittels einer Steuereinrichtung (41) der mobilen Einrichtung (40) zusätzliche Daten über eine Kontextsituation gesammelt werden, in der die Verteilungsverschiebung aufgetreten ist.

3. Verfahren nach einem der vorangegangenen Ansprüche, **dadurch gekennzeichnet, dass** das Ausgeben des Kandidatensignals (12) ein Übermitteln des Kandidatensignals (12) über eine Luftschnittstelle (6) von der zumindest einen mobilen Einrichtung (40) an eine Zentraleinrichtung (20) umfasst.

4. Verfahren nach Anspruch 3, **dadurch gekennzeichnet, dass** ausgegebene Kandidatensignale (12) der zumindest einen mobilen Einrichtung (40) von der Zentraleinrichtung (20) mittels einer Empfangseinrichtung (21) empfangen werden, wobei empfangene Kandidatensignale (12) der zumindest einen mobilen Einrichtung (40) mittels einer Assessoreinrichtung (22) der Zentraleinrichtung (20) ausgewertet werden, und wobei eine kumulierte Verteilungsverschiebung festgestellt wird und ein Feststellungssignal (13) erzeugt und ausgegeben wird, sofern eine Häufung von Kandidatensignalen (12) eines gleichen Typs festgestellt wird.

5. Verfahren nach Anspruch 4, **dadurch gekennzeichnet, dass** die Assessoreinrichtung (22) eine festgestellte kumulierte Verteilungsverschiebung bewertet und das Feststellungssignal (13) eine aus der Bewertung abgeleitete Bewertungsinformation umfasst.

6. Verfahren nach einem der Ansprüche 4 oder 5, **dadurch gekennzeichnet, dass** nach Feststellen der kumulierten Verteilungsverschiebung durch die Assessoreinrichtung (22) mindestens eine weitere der mobilen Einrichtungen (40) dazu veranlasst wird, eine Verteilungsverschiebung zu erkennen.

7. Verfahren nach einem der vorangegangenen Ansprüche, **dadurch gekennzeichnet, dass** die Verfahrensschritte alternativ oder zusätzlich mit mindestens einem weiteren zweiten Verarbeitungsmodul (3-2) wiederholt werden.

8. Verfahren nach einem der vorangegangenen Ansprüche, **dadurch gekennzeichnet, dass** die Eingangsdaten (10) vor dem Empfangen mittels einer Speichereinrichtung (42) der mobilen Einrichtung (40) aufgezeichnet werden und erst nach dem Aufzeichnen an die Eingangseinrichtung (2) übermittelt werden.

9. Vorrichtung (1) zum Erkennen einer Verteilungsverschiebung in einer Daten- und/oder Merkmalsverteilung von Eingangsdaten (10) für eine mobile Einrichtung (40), umfassend:
eine Eingangseinrichtung (2), wobei die Eingangseinrichtung (2) derart ausgebildet ist, die Eingangsdaten (10) zu empfangen,
ein erstes Verarbeitungsmodul (3-1) und mindestens ein zweites Verarbeitungsmodul (3-2), wobei das erste Verarbeitungsmodul (3-1) und das mindestens eine zweite Verarbeitungsmodul (3-2) sich strukturell voneinander unterscheiden, wobei zumindest das erste Verarbeitungsmodul (3-1) auf Grundlage von Maschinenlernen erstellt ist, und
wobei die Verarbeitungsmodule (3-1, 3-2) derart ausgebildet sind, eine der Zielsetzung nach identische Funktion auf den empfangenen Eingangsdaten (10) auszuführen, und
wobei die Verarbeitungsmodule (3-1,3-2) eine Wahrnehmungsfunktion ausführen, durch die Objekte im Umfeld der mobilen Einrichtung (40) klassifiziert werden,
eine Auswerteeinrichtung (4), wobei die Auswerteeinrichtung (4) derart ausgebildet ist, die von den Verarbeitungsmodulen (3-1, 3-2) gelieferten Ergebnisse (11) zu vergleichen und eine Verteilungsverschiebung auf Grundlage des Vergleichsergebnisses festzustellen,
wobei eine Verteilungsverschiebung festgestellt wird, wenn die Verarbeitungsmodule (3-1,3-2) unterschiedliche Klassifizierungen von Objekten als Ergebnisse (11) liefern, und sofern eine Verteilungsverschiebung festgestellt wurde, ein Kandidatensignal (12) bereitzustellen, und eine Ausgabeeinrichtung (5), wobei die Ausgabeeinrichtung (5) derart ausgebildet ist, das bereitgestellte Kandidatensignal (12) auszugeben,
wobei das Kandidatensignal (12) eine Beschreibung der verwendeten Verarbeitungsmodule (3-1, 3-2) und/oder eine Beschreibung des Vergleichsergebnisses und/oder eine Beschreibung einer Kontextsituation umfasst.

10. Vorrichtung nach Anspruch 9, **dadurch gekennzeichnet, dass** die Ausgabeeinrichtung (5) eine Luftschnittstelle (6) umfasst, wobei die Luftschnittstelle (6) derart ausgebildet ist, das Kandidatensignal (12) an eine Zentraleinrichtung (20) zu übermitteln.

11. Zentraleinrichtung (20) zum Erkennen einer Verteilungsverschiebung in einer Daten- und/oder Merkmalsverteilung von Eingangsdaten (10), umfassend:
eine Empfangseinrichtung (21), wobei die Empfangseinrichtung (21) derart ausgebildet ist, von einer Vorrichtung (1) gemäß einem der Ansprüche 9 oder 10 ausgegebene und
von dieser an die Zentraleinrichtung (20) übermittelte Kandidatensignale (12), welche eine Beschreibung der verwendeten Verarbeitungsmodule (3-1, 3-2) und/oder eine Beschreibung des Vergleichsergebnisses und/oder eine Beschreibung einer Kontextsituation umfassen, von zumindest einer eine solche Vorrichtung (1) umfassenden mobilen Einrichtung (40) zu empfangen,
eine Assessoreinrichtung (22), wobei die Assessoreinrichtung (22) derart ausgebildet ist, die empfangenen Kandidatensignale (12) der zumindest einen mobilen Einrichtung (40) auszuwerten und eine kumulierte Verteilungsverschiebung festzustellen und ein Feststellungssignal (13) zu erzeugen, sofern eine Häufung von Kandidatensignalen (12) eines gleichen Typs vorliegt, das heißt eine Verteilungsverschiebung, die zumindest mehr als einmal von einer mobilen Einrichtung (40) oder von mehreren mobilen Einrichtungen (40), festgestellt wurde, und
eine Ausgangseinrichtung (23), wobei die Ausgangseinrichtung (23) derart ausgebildet ist, das erzeugte Feststellungssignal (13) auszugeben.

12. Zentraleinrichtung (20) nach Anspruch 11, **dadurch gekennzeichnet, dass** die Assessoreinrichtung (22) ferner derart ausgebildet ist, nach Feststellen der kumulierten Verteilungsverschiebung mindestens eine weitere der mobilen Einrichtungen (40) dazu zu veranlassen, eine Verteilungsverschiebung zu erkennen.

13. System (30) zum Erkennen einer Verteilungsverschiebung in einer Daten- und/oder Merkmalsverteilung von Eingangsdaten (10), umfassend:
mindestens eine Vorrichtung (1) gemäß einem der Ansprüche 9 oder 10 und
eine Zentraleinrichtung (20) gemäß einem der Ansprüche 11 oder 12.

## Claims

1. Method for recognizing a distribution shift in a data distribution and/or feature distribution of input data (10), wherein the method is carried out in at least one mobile apparatus (40), comprising the following steps:
receiving the input data (10) using an input apparatus (2),
executing a function that is identical in terms of objective on the received input data (10) using a first processing module (3-1) and at least one second processing module (3-2), wherein the first processing module (3-1) and the at least one second processing module (3-2) are structurally different from one another, wherein at least the first processing module (3-1) has been created on the basis of machine learning, and wherein the processing modules (3-1, 3-2) execute a perception function using which objects in the surroundings of the mobile apparatus (40) are classified, comparing the results (11) delivered by the processing modules (3-1, 3-2) and
identifying a distribution shift on the basis of the comparison result using an evaluation apparatus (4), wherein a distribution shift is identified when the processing modules (3-1, 3-2) deliver different classifications of objects as results (11), and if a distribution shift has been identified:
providing a candidate signal (12) and
outputting the provided candidate signal (12) using an output apparatus (5),
wherein the candidate signal (12) comprises a description of the processing modules (3-1, 3-2) that are used and/or a description of the comparison result and/or a description of a context situation.

2. Method according to Claim 1, **characterized in that**, in the event of an identified distribution shift, additional data about a context situation in which the distribution shift occurred are collected using a control apparatus (41) of the mobile apparatus (40).

3. Method according to either of the preceding claims, **characterized in that** outputting the candidate signal (12) comprises transmitting the candidate signal (12) from the at least one mobile apparatus (40) to a central apparatus (20) via an air interface (6).

4. Method according to Claim 3, **characterized in that** output candidate signals (12) from the at least one mobile apparatus (40) are received by the central apparatus (20) using a reception apparatus (21), wherein received candidate signals (12) from the at least one mobile apparatus (40) are evaluated using an assessor apparatus (22) of the central apparatus (20), and wherein a cumulative distribution shift is identified and an identification signal (13) is generated and output if a cluster of candidate signals (12) of the same type is identified.

5. Method according to Claim 4, **characterized in that** the assessor apparatus (22) assesses an identified cumulative distribution shift and the identification signal (13) comprises assessment information derived from the assessment.

6. Method according to either of Claims 4 and 5, **characterized in that**, after the cumulative distribution shift has been identified by the assessor apparatus (22), at least one other of the mobile apparatuses (40) is prompted to recognize a distribution shift.

7. Method according to one of the preceding claims, **characterized in that** the method steps are alternatively or additionally repeated with at least one further second processing module (3-2).

8. Method according to one of the preceding claims, **characterized in that** the input data (10), prior to being received, are recorded using a storage apparatus (42) of the mobile apparatus (40) and are transmitted to the input apparatus (2) only after having been recorded.

9. Device (1) for recognizing a distribution shift in a data distribution and/or feature distribution of input data (10) for a mobile apparatus (40), comprising:
an input apparatus (2), wherein the input apparatus (2) is designed to receive the input data (10),
a first processing module (3-1) and at least one second processing module (3-2), wherein the first processing module (3-1) and the at least one second processing module (3-2) are structurally different from one another, wherein at least the first processing module (3-1) has been created on the basis of machine learning, and wherein the processing modules (3-1, 3-2) are designed to execute a function that is identical in terms of objective on the received input data (10), and wherein the processing modules (3-1, 3-2) execute a perception function using which objects in the surroundings of the mobile apparatus (40) are classified,
an evaluation apparatus (4), wherein the evaluation apparatus (4) is designed to compare the results (11) delivered by the processing modules (3-1, 3-2) and to identify a distribution shift on the basis of the comparison result, wherein a distribution shift is identified when the processing modules (3-1, 3-2) deliver different classifications of objects as results (11), and if a distribution shift has been identified, to provide a candidate signal (12), and an output apparatus (5), wherein the output apparatus (5) is designed to output the provided candidate signal (12), wherein the candidate signal (12) comprises a description of the processing modules (3-1, 3-2) that are used and/or a description of the comparison result and/or a description of a context situation.

10. Device according to Claim 9, **characterized in that** the output apparatus (5) comprises an air interface (6), wherein the air interface (6) is designed to transmit the candidate signal (12) to a central apparatus (20).

11. Central apparatus (20) for recognizing a distribution shift in a data distribution and/or feature distribution of input data (10), comprising:
a reception apparatus (21), wherein the reception apparatus (21) is designed to receive candidate signals (12), output by a device (1) according to either of Claims 9 and 10 and transmitted therefrom to the central apparatus (20) and comprising a description of the processing modules (3-1, 3-2) that are used and/or a description of the comparison result and/or a description of a context situation, from at least one mobile apparatus (40) comprising such a device (1),
an assessor apparatus (22), wherein the assessor apparatus (22) is designed to evaluate the received candidate signals (12) from the at least one mobile apparatus (40) and to identify a cumulative distribution shift and to generate an identification signal (13) if a cluster of candidate signals (12) of the same type is present, in other words a distribution shift that has been identified at least more than once by a mobile apparatus (40) or by multiple mobile apparatuses (40), and
an output apparatus (23), wherein the output apparatus (23) is designed to output the generated identification signal (13).

12. Central apparatus (20) according to Claim 11, **characterized in that** the assessor apparatus (22) is furthermore designed, after identifying the cumulative distribution shift, to prompt at least one other of the mobile apparatuses (40) to recognize a distribution shift.

13. System (30) for recognizing a distribution shift in a data distribution and/or feature distribution of input data (10), comprising:
at least one device (1) according to either of Claims 9 and 10 and
a central apparatus (20) according to either of Claims 11 and 12.

## Revendications

1. Procédé de détection d'un décalage de distribution dans une distribution de données et/ou de caractéristiques de données d'entrée (10), le procédé étant mis en œuvre dans au moins une unité mobile (40), le procédé comprenant les étapes suivantes :
recevoir des données d'entrée (10) au moyen d'une unité d'entrée (2),
exécuter une fonction identique en terme d'objectif sur les données d'entrée reçues (10) au moyen d'un premier module de traitement (3-1) et d'au moins un deuxième module de traitement (3-2), le premier module de traitement (3-1) et l'au moins un deuxième module de traitement (3-2) différant structurellement l'un de l'autre, au moins le premier module de traitement (3-1) ayant été créé sur la base d'un apprentissage automatique, et les modules de traitement (3-1, 3-2) exécutant une fonction de perception permettant de classifier des objets dans l'environnement du dispositif mobile (40),
comparer les résultats (11) fournis par les modules de traitement (3-1, 3-2) et
déterminer un décalage de distribution sur la base du résultat de comparaison au moyen d'une unité d'évaluation (4), un décalage de distribution étant déterminé si les modules de traitement (3-1, 3-2) fournissent différentes classifications d'objets comme résultats (11), et, dans le cas où un décalage de distribution a été déterminé : fournir un signal candidat (12), et
délivrer le signal candidat fourni (12) au moyen d'une unité de délivrance (5),
le signal candidat (12) comprenant une description des modules de traitement (3-1, 3-2) utilisés et/ou une description du résultat de comparaison et/ou une description d'une situation de contexte.

2. Procédé selon la revendication 1, **caractérisé en ce que**, dans le cas où un décalage de distribution a été détecté, des données supplémentaires sur une situation de contexte, dans laquelle le décalage de distribution s'est produit, sont collectées au moyen d'une unité de commande (41) de l'unité mobile (40).

3. Procédé selon l'une des revendications précédentes, **caractérisé en ce que** la délivrance du signal candidat (12) comprend la transmission du signal candidat (12), par le biais d'une interface radio (6), de l'au moins une unité mobile (40) à une unité centrale (20).

4. Procédé selon la revendication 3, **caractérisé en ce que** des signaux candidats (12) délivrés de l'au moins une unité mobile (40) sont reçus par l'unité centrale (20) au moyen d'une unité de réception (21), des signaux candidats (12) reçus de l'au moins une unité mobile (40) étant évalués au moyen d'une unité d'évaluation (22) dans l'unité centrale (20), et un décalage de distribution cumulé étant déterminé et un signal de détermination (13) étant généré et délivré si une accumulation de signaux candidats (12) du même type est déterminée.

5. Procédé selon la revendication 4, **caractérisé en ce que** l'unité d'évaluation (22) évalue un décalage de distribution cumulé déterminé et le signal de détermination (13) comprend des informations d'évaluation dérivées de l'évaluation.

6. Procédé selon l'une des revendications 4 ou 5, **caractérisé en ce que**, après que le décalage de distribution cumulé a été déterminé par l'unité d'évaluation (22), au moins une autre des unités mobiles (40) est amenée à détecter un décalage de distribution.

7. Procédé selon l'une des revendications précédentes, **caractérisé en ce que** les étapes de procédé sont répétées alternativement ou en plus avec au moins un autre deuxième module de traitement (3-2).

8. Procédé selon l'une des revendications précédentes, **caractérisé en ce que** les données d'entrée (10) sont enregistrées avant d'être reçues au moyen d'une unité de mémorisation (42) de l'unité mobile (40) et ne sont transmises à l'unité d'entrée (2) qu'après l'enregistrement.

9. Dispositif (1) de détection d'un décalage de distribution dans une distribution de données et/ou de caractéristiques de données d'entrée (10) destinées à une unité mobile (40), ledit dispositif de détection comprenant :
une unité d'entrée (2), l'unité d'entrée (2) étant conçue pour recevoir les données d'entrée (10),
un premier module de traitement (3-1) et au moins un deuxième module de traitement (3-2), le premier module de traitement (3-1) et l'au moins un deuxième module de traitement (3-2) différant structurellement l'un de l'autre, au moins le premier module de traitement (3-1) étant créé sur la base d'un apprentissage automatique, et les modules de traitement (3-1, 3-2) étant conçus de manière à exécuter sur les données d'entrée reçues (10) une fonction qui est identique en termes d'objectif, et les modules de traitement (3-1, 3-2) exécutant une fonction de perception permettant de classifier des objets dans l'environnement de l'unité mobile (40),
une unité d'évaluation (4), l'unité d'évaluation (4) étant conçue pour comparer les résultats (11) fournis par les modules de traitement (3-1, 3-2) et pour déterminer un décalage de distribution sur la base du résultat de comparaison, un décalage de distribution étant déterminé si les modules de traitement (3-1, 3-2) fournissent différentes classifications d'objets comme résultats (11) et, dans le cas où un décalage de distribution a été déterminé, fournir un signal candidat (12), et une unité de délivrance (5), l'unité de délivrance (5) étant conçue pour délivrer le signal candidat (12) fourni,
le signal candidat (12) comprenant une description des modules de traitement (3-1, 3-2) utilisés et/ou une description du résultat de comparaison et/ou une description d'une situation de contexte.

10. Dispositif selon la revendication 9, **caractérisé en ce que** l'unité de délivrance (5) comprend une interface radio (6), l'interface radio (6) étant conçue de manière à transmettre le signal candidat (12) à une unité centrale (20).

11. Unité centrale (20) destinée à détecter un décalage de distribution dans une distribution de données et/ou de caractéristiques de données d'entrée (10), ladite unité centrale comprenant :
une unité de réception (21), l'unité de réception (21) étant conçue de manière à recevoir des signaux candidats (12) qui sont délivrés par un dispositif (1) selon l'une des revendications 9 ou 10 et transmis par celui-ci à l'unité centrale (20) et qui comprennent une description des modules de traitement (3-1, 3-2) utilisés et/ou une description du résultat de comparaison et/ou une description d'une situation de contexte, par le biais d'au moins une unité mobile (40) comportant un tel dispositif (1),
une unité d'évaluation (22), l'unité d'évaluation (22) étant conçue pour évaluer les signaux candidats (12) reçus de l'au moins une unité mobile (40) et déterminer un décalage de distribution cumulé et générer un signal de détermination (13) en présence d'une accumulation de signaux candidats (12) du même type, c'est-à-dire un décalage de distribution qui a été détecté au moins plus d'une fois par une unité mobile (40) ou par plusieurs unités mobiles (40), et
une unité de délivrance (23), l'unité de délivrance (23) étant conçue de manière à délivrer le signal de détection généré (13).

12. Unité centrale (20) selon la revendication 11, **caractérisée en ce que** l'unité d'évaluation (22) est également conçue pour amener au moins une autre des unités mobiles (40) à détecter un décalage de distribution après que le décalage de distribution cumulé a été déterminé.

13. Système (30) de détection d'un décalage de distribution dans une distribution de données et/ou de caractéristiques de données d'entrée (10), ledit système comprenant :
au moins un dispositif (1) selon l'une des revendications 9 ou 10 et une unité centrale (20) selon l'une des revendications 11 ou 12.
